## Europäisches Patentamt

## European Patent Office

## Office européen des brevets

(11) Veröffentlichungsnummer: **0 005 459**
A1

(12) **EUROPÄISCHE PATENTANMELDUNG**

(21) Anmeldenummer: 79101225.5

(22) Anmeldetag: 23.04.79

(51) Int. Cl.²: **B 23 B 31/16**

(30) Priorität: 19.05.78 DE 2821850

(43) Veröffentlichungstag der Anmeldung:
28.11.79 Patentblatt 79/24

(84) Benannte Vertragsstaaten:
CH DE FR GB IT

(71) Anmelder: **Röhm, Günter Horst**
**Heinrich-Röhm-Strasse 50**
**D-7927 Sontheim(DE)**

(72) Erfinder: **Röhm, Günter Horst**
**Heinrich-Röhm-Strasse 50**
**D-7927 Sontheim(DE)**

(74) Vertreter: **Fay, Hermann, Dipl.-Phys. Dr.**
**Postfach 1767**
**Ensingerstrasse 21 D-7900 Ulm (Donau)(DE)**

(54) Spannfutter für Drehmaschinen.

(57) Spannfutter für Drehmaschinen mit Spannbacken (2) aus einem axial vorderen Backenteil (2a) und einem axial hinteren Backenteil (2b), die jeweils für sich radial verstellbar im Futterkörper (1) geführt sind. Der hintere Backenteil (2b) steht einerseits mit einem Antriebsglied (4) für die Backenverstellung, andererseits mit dem vorderen Backenteil (2a) durch ein von außen betätigbares Kupplungsstück (16) im Eingriff, das im hinteren Backenteil (2b) geführt ist und im eingekuppelten Zustand in eine Verzahnung (18a) greift, die sich radial längs des vorderen Backenteiles (2a) an dessen Rückseite erstreckt. Für eine Änderung des Spanndurchmessers genügt es daher, den vorderen Backenteil (2a) gegenüber dem hinteren Backenteil (2b) zu verstellen. Der vordere Backenteil (2a) braucht somit nicht mehr zur radialen Verstellung etwa an ihn angesetzter Aufsatzbacken (40) eingerichtet zu sein. Um trotzdem zu einer solchen Verstellung ausgebildete, nämlich mit einer radial längs verlaufenden Führungsnut (41) für Nutsteine und mit axialen Durchgangsbohrungen (42) für die Nutsteine haltende Befestigungsschrauben (43) versehene Aufsatzbacken (40) am vorderen Backenteil (2a) ansetzen zu können, ohne dort eine sonst zur Aufnahme der Nutsteine dienende T- oder Kreuznut vorsehen zu müssen, besitzt der vordere Backenteil (2a) an seiner Vorderseite lediglich eine flache, der Führungsnut (41) der Aufsatzbacke (40) gegenüberliegende Führungsnut (44), eine spitzverzahnte Auflagefläche (45) für die Aufsatzbacke (40) und Gewindelöcher (46) für die Befestigungsschrauben (43). In den von beiden Führungsnuten (41, 44) gebildeten Längskanal ist eine Leiste (47) eingesetzt, die die Aufsatzbacke (40) am vorderen Backenteil (2a) ausrichtet.

Fig. 1

EP 0 005 459 A1

- 1 -

## Spannfutter für Drehmaschinen.

Die Erfindung betrifft ein Spannfutter mit radial im Futterkörper verstellbar geführten Spannbacken, die zu ihrer Verstellung einzeln oder gemeinsam mit einem Antriebsglied in kraft- und formschlüssigem Eingriff stehen und radial und quer zur Futterachse in einen axial vorderen Backenteil und einen axial hinteren Backenteil aufgetrennt sind, die beide jeweils für sich radial verstellbar im Futterkörper geführt sind, wobei nur der hintere Backenteil mit dem Antriebsglied im Eingriff steht und ein von außen ein- und ausrückbares Kupplungsglied vorgesehen ist, das im ausgerückten Kupplungszustand den vorderen Backenteil zur vom hinteren Backenteil unabhängigen radialen Verstellung freigibt und im eingerückten Kupplungszustand beide Backenteile zur radialen Mitnahme des vorderen Backenteiles durch den hinteren Backenteil verbindet, wozu das Kupplungsstück in Kupplungsaufnahmen des vorderen

- 2 -

Backenteiles eingreift, die als eine Verzahnung ausgebildet sind, welche sich an der dem hinteren Backenteil zugekehrten Seite des vorderen Backenteiles über einen größeren Abschnitt seiner radialen Länge, insbesondere über die gesamte radiale Länge des vorderen Backenteiles erstreckt.

Derartige Spannfutter besitzen den Vorteil, daß zu einem Backenwechsel nur noch der vordere Backenteil ausgewechselt werden braucht und daß es allein durch Verstellen des Kupplungsstückes möglich ist, die beiden Backenteile zum Spannvorgang miteinander zu verbinden oder zum gegenseitigen radialen Verstellen bei einer Änderung des Spanndurchmessers oder zum gänzlichen Auswechseln des vorderen Backenteiles voneinander zu trennen. Sind die beiden Backenteile voneinander getrennt und wird der vordere Backenteil über den Bereich seiner Kupplungsverzahnung zur Änderung des Spanndurchmessers verstellt oder gänzlich ausgewechselt, so bleibt der hintere Backenteil in seiner Stellung im Futterkörper unverändert stehen und insbesondere im kraft- und formschlüssigen Eingriff mit dem die radiale Backenspannbewegungen bewirkenden Antriebsglied verbunden. Dieser Eingriff braucht somit zum Verstellen oder Wechseln des vorderen Backenteiles nicht vorübergehend aufgehoben werden. Soweit zur Anpassung an die jeweils einzuspannende Werkstücke besondere Aufsatzbacken auf den vorderen Backenteilen verwendet werden, brauchen diese Aufsatzbacken eine

0005459

- 3 -

radiale Längsverschiebung gegenüber den vorderen Backenteilen nicht ermöglichen, da diese Verschiebung zwischen dem vorderen und hinteren Backenteil bewirkt werden kann.

Bei Spannfuttern üblicher Art, deren im Futterkörper geführte Grundspannbacken nicht wie in der vorbeschriebenen Weise in einen vorderen und einen hinteren Backenteil getrennt sind, ist eine Änderung des Spanndurchmessers und ein Backenwechsel hingegen nur hinsichtlich der Aufsatzbacken möglich. Die dazu üblichen Aufsatzbacken sitzen über eine Spitzverzahnung auf der Grundbacke und tragen Nutsteine, die in einer radial längs verlaufenden Führungsnut der Aufsatzbacke ausgerichtet und an Befestigungsschrauben gehalten sind, die in Gewindelöcher der Nutsteine eingeschraubt und in axialen Durchgangsbohrungen der Aufsatzbacke geführt und fixiert sind. Die Nutsteine greifen in eine radial verlaufende T- oder Kreuznut der Grundbacke und sind darin durch Anziehen der Befestigungsschrauben verspannbar, bzw. bei gelockerten Befestigungsschrauben längsverstellbar. Ersteres ermöglicht die starre Befestigung der Aufsatzbacke an der Grundbacke, letzteres die Anpassung der Aufsatzbacken an den gewünschten Spanndurchmesser oder ihre Auswechslung. Allerdings ist die Bearbeitung der Grundbacken im Zusammenhang mit dieser T- oder Kreuznut besonders deswegen umständlich und aufwendig, weil durch das Verspannen der Nutsteine die

- 4 -

Grundbacke im Bereich der T- oder Kreuznut verformt wird, insbesondere ihre zwischen sich die Nut bildenden Schenkelstücke aufgespreizt werden, was ein vorbeugendes freies Spiel der Grundbacke in ihrer eigenen Führung im Futterkörper erfordert, um die Gefahr auszuschließen, daß sich die Grundbacke im Futterkörper beim Spannen der Nutsteine verklemmt.

Sehr häufig besteht in der Praxis der Wunsch, Aufsatzbacken dieser üblichen Art, die für die Einspannung bestimmter Werkstücke schon vorhanden sind, auch an einem Spannfutter der eingangs genannten Art benutzen zu können. Das erfordert, die vorderen Backenteile eines solchen Spannfutters ebenfalls mit der erwähnten T- oder Kreuznut für die Nutsteine zu versehen, um die üblichen Aufsatzbacken an den vorderen Backenteilen überhaupt befestigen zu können. Man muß also für die vorderen Backenteile die schon erwähnten, durch eine derartige T- oder Kreuznut bedingten Führungsschwierigkeiten und Bearbeitungserschwernisse in Kauf nehmen, obwohl diese Nut für die Backenverstellung oder den Backenwechsel wegen der Zweiteilung der Grundbacken überhaupt nicht mehr erforderlich ist.

Der Erfindung liegt die Aufgabe zugrunde, ein Spannfutter der eingangs genannten Art so weiter auszubilden und zu verbessern, daß an seinen vorderen Backenteilen Aufsatzbacken der beschriebenen üb-

- 5 -

lichen Art angebracht werden können, ohne daß
es dazu einer Änderung dieser Aufsatzbacken
oder einer T- bzw. Kreuznut für die Nutsteine
im vorderen Backenteil bedarf.

Diese Aufgabe wird nach der Erfindung dadurch gelöst, daß zum Anschluß üblicher Aufsatzbacken mit
einer radial längs verlaufenden Führungsnut für
Nutsteine und mit axialen Durchgangsbohrungen zur
Aufnahme von die Nutsteine haltenden Befestigungsschrauben der vordere Backenteil auf seiner der
Kupplungsverzahnung gegenüberliegenden Vorderseite
anstelle einer sonst zur Aufnahme der Nutsteine
dienenden T- oder Kreuznut lediglich eine flache,
der Führungsnut der Aufsatzbacke gegenüberliegende
Führungsnut, ferner eine spitzverzahnte Auflagefläche für die Aufsatzbacke und Gewindelöcher für
die Befestigungsschrauben aufweist, und daß zwischen
den vorderen Backenteil und die Aufsatzbacke in den
von beiden Führungsnuten gebildeten Längskanal eine
die Aufsatzbacke tangential zur Futterachse am
vorderen Backenteil ausrichtende Leiste eingesetzt
ist. Die Leiste ist zweckmäßig in einer der beiden
Führungsnuten unverlierbar befestigt.

Der durch die Erfindung erreichte Fortschritt besteht im wesentlichen darin, daß es zur Befestigung
der üblichen Aufsatzbacken am vorderen Backenteil
des erfindungsgemäßen Spannfutters lediglich erforderlich ist, die Nutsteine von den Befestigungs-

- 6 -

schrauben zu lösen und dann die Aufsatzbacke ohne die Nutsteine mittels der Befestigungsschrauben auf der spitzverzahnten Fläche des vorderen Backenteiles zu befestigen. Die flache Führungsnut für die Leiste beeinträchtigt im vorderen Backenteil dessen Stabilität in keiner Weise. Im Ergebnis können die vorhandenen üblichen Aufsatzbacken ohne weiteres und ohne T- oder Kreuznut an den vorderen Backenteilen des erfindungsgemäßen Spannfutters angebracht werden.

Im folgenden wird die Erfindung an einem in der Zeichnung dargestellten Ausführungsbeispiel näher erläutert; es zeigen:

Fig. 1 einen Axialschnitt durch ein Spannfutter nach der Erfindung,

Fig. 2 einen Teilschnitt durch das Spannfutter nach Fig. 1 in Richtung der dort eingetragenen Schnittlinie II - II.

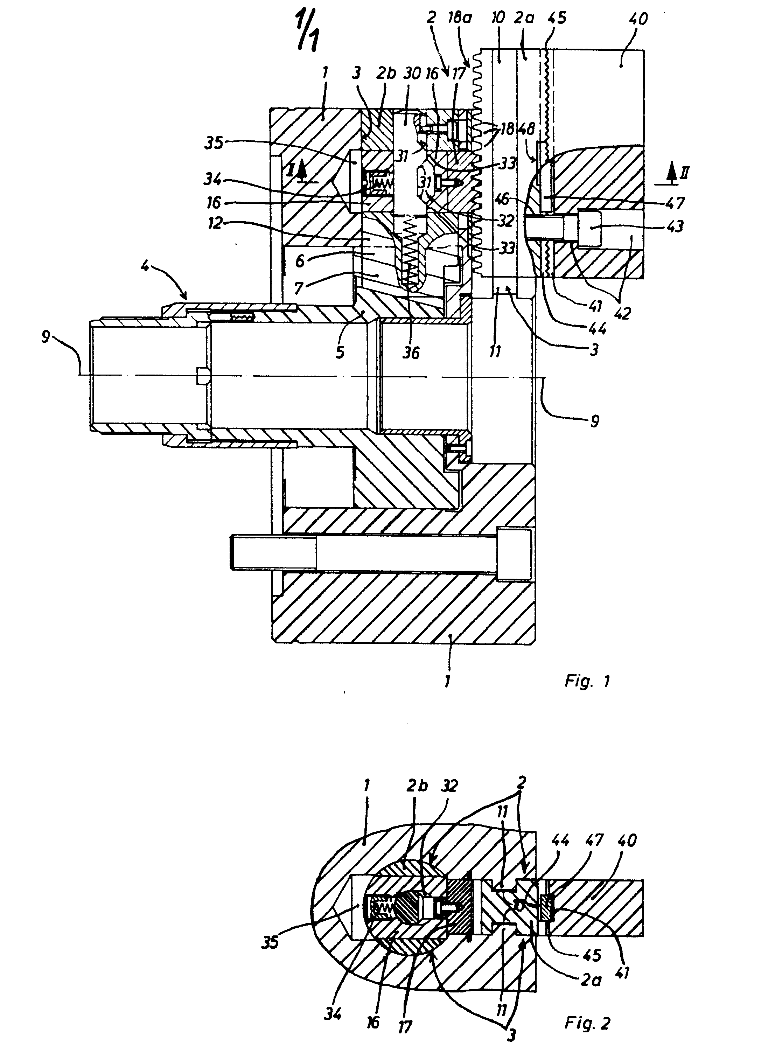

In der Zeichnung ist der Futterkörper des Spannfutters allgemein mit 1, die darin radial verstellbar geführten Spannbacken sind allgemein mit 2 bezeichnet. Zu ihrer Führung sind im Futterkörper allgemein mit 3 bezeichnete radiale Führungsnuten vorgesehen. Im Axialschnitt nach Fig. 1 ist jeweils nur eine Spannbacke 2 erkennbar, jedoch besitzt ein solches Futter in der Regel mehr als

nur eine, zumeist drei Spannbacken. Die Spannbacken 2 stehen zu ihrer radialen Verstellung mit einem Antriebsglied 4 in kraft- und formschlüssigem Eingriff, das im Ausführungsbeispiel als axial verstellbare Treibhülse 5 ausgebildet ist, die über Keilhaken 6, 7 mit den Spannbacken 2 im Eingriff steht, wobei der Keilhaken 6 an der Treibhülse 5, der Keilhaken 7 an der Spannbacke 2 sitzt. Wird die Treibhülse 5 in Fig. 1 nach links verschoben, so werden die Spannbacken 2 radial einwärts bewegt, bei entgegengesetzter axialer Verstellung der Treibhülse 5 dagegen radial auswärts verschoben. Die Treibhülse 5 kann in hier nicht weiter zu beschreibender Weise durch einen Spannzylinder betätigt werden, dessen Spannkolben durch die hohle Drehmaschinenspindel hindurch über eine Zugstange oder ein Zugrohr mit der Treibhülse 5 verbunden sein kann. Ein solcher Kraftspannzylinder kann aber auch unmittelbar im Futterkörper 1 angeordnet sein. Anstelle der Keilhaken 6, 7 können auch andere Kraftübertragungsglieder und -getriebe zwischen dem Antriebsglied 4 und den Spannbacken 2 vorgesehen sein.

Die Spannbacken 2 sind radial und quer zur Futterachse 9, im Ausführungsbeispiel in einer zur Futterachse 9 senkrechten Ebene, in einen axial vorderen Backenteil 2a und einen axial hinteren Backenteil 2b getrennt. Beide Backenteile

- 8 -

2a, 2b sind jeweils für sich radial verstellbar in den Nuten 3 des Futterkörpers 1 geführt, nämlich der vordere Backenteil 2a mit Führungsnuten 10 in entsprechenden Führungsleisten des Futterkörpers 1, und der hintere, im Querschnitt kreiszylindrische Backenteil 2b in entsprechend kreiszylindrischen Führungsnuten 12 des Futterkörpers 1. Im übrigen lassen die Stellung des hinteren Backenkörpers 2b und die Eingriffsverhältnisse der Keilhaken 6, 7 in Fig. 1 erkennen, daß die hinteren Backenteile 2b in ihrer radial jeweils äußersten Stellung gezeigt sind.

Von beiden Backenteilen 2a, 2b steht jeweils nur der hintere Backenteil 2b mit dem Antriebsglied 4, im Ausführungsbeispiel also den Keilhaken 6 der Treibhülse 5, im Eingriff. Ein von außen ein- und ausrückbares Kupplungsstück 16 dient dazu, daß im eingerückten Kupplungszustand, wie er in der Zeichnung dargestellt ist, beide Backenteile 2a, 2b zur radialen Mitnahme des vorderen Backenteiles 2a durch den hinteren Backenteil 2b starr verbunden sind, während es im nicht dargestellten ausgerückten Kupplungszustand den vorderen Backenteil 2a zur vom hinteren Backenteil 2b unabhängigen radialen Verstellung freigibt, so daß der vordere Backenteil 2a in der radialen Führungsnut 3 gegenüber dem hinteren Backenteil 2b zwecks Änderung des Spanndurchmessers verschoben oder aus der radialen Führungsnut 3 vollständig herausgenommen und gegen einen anders gestalteten Backenteil ausgewechselt werden kann. Der hintere Backenteil 2b dagegen ist nicht auswechselbar und bleibt ständig im Eingriff mit dem Antriebsglied 4.

Im einzelnen ist das Kupplungsstück 16 im hinteren Backenteil 2b radial starr gehalten, axial aber vor- und zurückstellbar geführt. Es trägt einen Kupplungskopf 17, der bei vorgestelltem Kupplungsstück 16, wie dargestellt, in radialer Richtung formschlüssig in zugeordnete Kupplungsaufnahmen 18 des vorderen Backenteiles 2a eingreift. Dabei ist in der Zeichnung als einfachste Ausführungsform die Ausbildung des Kupplungsstückes 16 als axial im hinteren Backenteil 2b geführter Schieber in Form eines kreiszylindrischen Bolzens dargestellt. Die Kupplungsaufnahmen 18 sind durch eine Querverzahnung 18a an der dem hinteren Backenteil 2b zugewendeten Trennfläche des vorderen Backenteiles 2a gebildet. Der Kupplungskopf 17 ist mit einer entsprechenden Verzahnung versehen, die in die des vorderen Backenteiles 2a eingreift, wie es die Fig. 1 unmittelbar erkennen läßt. Die Querverzahnung 18a des vorderen Backenteiles 2a erstreckt sich im Ausführungsbeispiel über dessen gesamte radiale Länge, so daß es an jeder Stelle dieser Länge mit dem Kupplungsstück 16, bzw. seinem Kupplungskopf 17, in Eingriff gebracht werden kann.

Zur Verstellung des Kupplungsstückes 16 zwischen dem eingerückten und dem ausgerückten Zustand dient im Ausführungsbeispiel ein von außen betätigbares Stellglied 30, an dem das Kupplungsstück 16 axial in Richtung seiner Verstellung in den eingerückten Kupplungszustand zwangsgeführt ist. Das Stellglied 30 ist seinerseits im wesentlichen radial verstellbar im hinteren Backenteil 2b geführt und besitzt für diese Zwangsführung schräge Führungsflächen 31. Im einzelnen ist das Stellglied 30 ein gegen die Kraft einer Feder 36 radial einwärts gegen die Futterachse 9 eindrückbarer Bolzen, der eine die axiale Verstellbewegung des Kupplungsgliedes 16 ermöglichende Aussparung 32 durchgreift und im Bereich dieser Aussparung 32 die schrägen Führungsflächen 31 trägt, welchen das Kupplungsstück 16 anliegt. An die schrägen Führungsflächen 31 schließen im wesentlichen radial gerichtete Sperrflächen 33 an, die bei ungedrücktem Stellglied im dargestellten eingerückten Zustand das Kupplungsstück 16 verriegeln, das sich somit in Fig. 1 nicht nach links bewegen kann. Wird das Stellglied 30 dagegen radial einwärts gedrückt, so wird die Verriegelung des Kupplungsstückes 16 aufgehoben und es kann unter der Kraft einer Feder 34 in eine Ausnehmung 35 im Futterkörper 1 eintreten, wenn bei entsprechender radialer Verstellung des hinteren Backenteiles 2b das Kupplungsstück 16 diese Ausnehmung passiert. Das Eintreten des Kupplungsstückes 16 in diese Ausnehmung 35 ermöglicht die Verstellung des Kupplungsstückes
16 bis in seinen ausgerückten Zustand. Da dies
in die Ausnehmung 35 eingetretene Kupplungsstück
16 durch seinen Sitz in der Ausnehmung keine
radiale Verstellung mehr erlaubt, ist im ausgerückten Kupplungszustand der hintere Backenteil
2b und damit das Antriebsglied 4 keiner Spannverstellung mehr fähig. Die Drehmaschine kann daher
auch nicht versehentlich anlaufen, wenn der
hintere Backenteil 2b mit dem vorderen Backenteil 2a nicht verbunden ist. Wird das eingedrückte Stellglied 30 wieder freigelassen, so
bewegt es sich unter der Wirkung der Rückstellfeder 36 radial nach außen. Dabei wird über die
schrägen Führungsflächen 31 das Kupplungsstück,
16 in der Fig. 1 nach rechts bewegt, bis sein
Kupplungskopf 17 wieder zum formschlüssigen
Eingriff in die Verzahnung 18a des vorderen
Spannbackenteiles 2a gelangt. Das losgelassene
Stellglied 30 verriegelt dann zwangsläufig
wieder unter der Kraft seiner Feder 36 das Kupplungsstück 16 in seiner beide Backenteile 2a,
2b verbindenden eingerückten Stellung.

Um am vorderen Backenteil 2a übliche Aufsatzbacken
40 anschließen zu können, die mit einer radial
längs verlaufenden Führungsnut 41 für in der Zeichnung nicht dargestellte Nutsteine und mit axialen
Durchgangsbohrungen 42 zur Aufnahme von die Nutsteine haltenden Befestigungsschrauben 43 versehen sind, besitzt der vordere Backenteil 2a auf seiner der Kupplungsverzahnung 18a gegenüberliegenden Vorderseite anstelle einer sonst zur Aufnahme der Nutsteine dienenden T- oder Kreuznut lediglich eine flache, der Führungsnut 41 der Aufsatzbacke 40 gegenüberliegende Führungsnut 44, ferner eine spitzverzahnte Auflagefläche 45 für die Aufsatzbacke und Gewindelöcher 46 für die Befestigungsschrauben 43. Zwischen den vorderen Backenteil 2a und die Aufsatzbacke 40 ist in den von beiden Führungsnuten 41, 44 gebildeten Längskanal eine die Aufsatzbacke 40 tangential zur Futterachse 9 am vorderen Backenteil 2a ausrichtende Leiste 47 eingesetzt, die in einer der beiden Führungsnuten 41, 44 unverlierbar befestigt sein kann. Im übrigen kann der vordere Backenteil 2a zur Aufnahme anders gestalteter Aufsatzbacken auch eine Quernut tragen, wie sie in Fig. 1 bei 48 erkennbar ist.

- 1 -

Patentansprüche:

1. Spannfutter mit radial im Futterkörper verstellbar geführten Spannbacken, die zu ihrer Verstellung einzeln oder gemeinsam mit einem Antriebsglied in kraft- und formschlüssigem Eingriff stehen und radial und quer zur Futterachse in einen axial vorderen Backenteil und einen axial hinteren Backenteil aufgetrennt sind, die beide jeweils für sich radial verstellbar im Futterkörper geführt sind, wobei nur der hintere Backenteil mit dem Antriebsglied im Eingriff steht und ein von außen ein- und ausrückbares Kupplungsglied vorgesehen ist, das im ausgerückten Kupplungszustand den vorderen Backenteil zur vom hinteren Backenteil unabhängigen radialen Verstellung freigibt und im eingerückten Kupplungszustand beide Backenteile zur radialen Mitnahme des vorderen Backenteiles durch den hinteren Backenteil verbindet, wozu das Kupplungsstück in Kupplungsaufnahmen des vorderen Backenteiles eingreift, die als eine Verzahnung ausgebildet sind, welche sich an der dem hinteren Backenteil zugekehrten Seite des vorderen Backenteiles über einen größeren Abschnitt seiner radialen Länge, insbesondere über die gesamte radiale Länge des vorderen Backenteiles erstreckt, dadurch gekennzeichnet, daß zum Anschluß üblicher Aufsatzbacken (40) mit einer radial längsverlaufenden Führungsnut (41) für Nutsteine und mit

- 2 -

axialen Durchgangsbohrungen (42) zur Aufnahme von die Nutsteine haltenden Befestigungsschrauben (43) der vordere Backenteil (2a) auf seiner der Kupplungsverzahnung (18a) gegenüberliegenden Vorderseite anstelle einer sonst zur Aufnahme der Nutsteine dienenden T- oder Kreuznut lediglich eine flache, der Führungsnut (41) der Aufsatzbacke (40) gegenüberliegende Führungsnut (44), ferner eine spitzverzahnte Auflagefläche (45) für die Aufsatzbacke (40) und Gewindelöcher (46) für die Befestigungsschrauben (43) aufweist, und daß zwischen den vorderen Backenteil (2a) und die Aufsatzbacke (40) in den von beiden Führungsnuten (41, 44) gebildeten Längskanal eine die Aufsatzbacke (40) tangential zur Futterachse (9) am vorderen Backenteil (2a) ausrichtende Leiste (47) eingesetzt ist.

2. Spannfutter nach Anspruch 1, dadurch gekennzeichnet, daß die Leiste (47) in einer der beiden Führungsnuten (41, 44) unverlierbar befestigt ist.

0005459

Fig. 1

Fig. 2

0005459

**Europäisches Patentamt**

# EUROPÄISCHER RECHERCHENBERICHT

Nummer der Anmeldung

EP 79 101 225.5

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | US - A - 2 708 118 ( F.L. KUCHENBROD)<br>* Spalte 2, Zeile 57 bis Spalte 3, Zeile 18; Fig. 2,4,5 * | 1,2 |
| | US - A - 3 157 408 (C.S. MANN)<br>* Spalte 3, Zeile 66 bis Spalte 4, Zeile 3; Fig. 7, 8 * | 1,2 |
| P | DE - A - 2 711 904 (RÖHM)<br>* Fig. 1, 6 * | 1 |
| A | DE - B - 1 288 872 (FORKARDT)<br>* Spalte 3, Zeilen 26 bis 34 * | 1 |
| A | US - A - 3 682 491 (SAKAZAKI et al.)<br>* Fig. 9 bis 13 * | 1 |
| A | DE - A - 2 533 770 (RÖHM)<br>* Seite 3, Zeilen 10 bis 18 * | 1 |

----

### KLASSIFIKATION DER ANMELDUNG (Int.Cl.²)

B 23 B 31/16

### RECHERCHIERTE SACHGEBIETE (Int. Cl.²)

B 23 B 31/00

### KATEGORIE DER GENANNTEN DOKUMENTE

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

X | Der vorliegende Recherchenbericht wurde für alle Patentansprüche erstellt.

| Recherchenort | Abschlußdatum der Recherche | Prüfer |
|---|---|---|
| Berlin | 31-07-1979 | MARTIN |

EPA form 1503.1 06.78